# EUROPEAN PATENT SPECIFICATION

(11) **EP 1 787 831 B1**
(45) Date of publication and mention of the grant of the patent: **18.07.2012**
(21) Application number: 06119664.8
(22) Date of filing: 29.08.2006
(51) Int. Cl.: B60C 23/04

(54) **Apparatus for monitoring the pressure in tyres**
Einrichtung zur Überwachung des Reifendruckes
Appareil de surveillance de la pression d'un pneumatique

(30) Priority: 22.11.2005 IT MI20052225
(43) Date of publication of application: 23.05.2007
(73) Proprietor: STE s.a.s. di G. Moiraghi & C., 20134 Milano (IT)
(72) Inventor: Moiraghi, Guido, 20133, Milano (IT); Moiraghi, Luca, 20131, Milano (IT); Moiraghi, Paolo, 27020, Marcignago (PV) - Fraz. Divisa (IT)
(74) Representative: Mittler, Enrico

(56) References cited:
- US-A- 5 731 516
- US-A- 5 774 048
- US-A1- 2002 084 841

## Description

The present invention concerns an apparatus for monitoring the pressure in tyres.

In the state of the art, valves are known for ring of tyres which prevent loss of air from the inside of the tyres even when the tyre is subjected to high speeds of rotation.

Sensors are also known in the state of the art located inside motor vehicle tyres, capable of measuring the air or gas pressure inside the tyre.

Said sensors are connected to means capable of transmitting the data measured by the sensors to units located on the vehicle's control panel, so that the user can be made aware in real time of the pressure in the tyres on his/her motor vehicle.

An apparatus for monitoring the pressure in a tyre according to the preamble of claim 1 is known from US5,731,516. Transmitting pulse position modulated pressure signals is known from US2002/0084841 A1. Further, US2001/0008083 A1 shows a transmitter employing a SAW (Surface Acoustic Wave) resonator as the basic radio frequency generating element.

Said means however are not capable of transmitting data measured by the sensor when the motor vehicle reaches high speeds. Furthermore, said means have an average consumption of current from the battery contained inside the tyre which is such as to render the system insufficiently reliable in the temperature range required by the rules on automotive applications, i.e between -40°C and +125°C. In fact, if radio waves using UHF- and VHF-frequency transmission are employed for data transmission, considerable difficulties are encountered relating to the consumption of the battery, which is necessarily of small dimensions and with limited capacity for current output in the temperature range required by the regulations on the subject of automotive applications, i.e between -40°C and +125°C.

The traditional transmission systems, whether operating by amplitude modulation or frequency modulation, and using a 3 volt power supply device, are characterised by a current consumption of the order of 20 milliamperes and require a transmission time of the order of 10 milliseconds. The known power supply devices for the above-mentioned transmission systems which have low weight and small dimensions are not capable of delivering the required current, especially at the lowest working temperatures.

In view of the state of the art, an object of the present invention is to provide an apparatus for monitoring the pressure in tyres which overcomes the above-mentioned disadvantages.

In accordance with the present invention this object is achieved by means of an apparatus for monitoring the pressure in at least one tyre, as defined in claim 1.

Still in accordance with the present invention it is possible to provide an inflating device as defined in claim 9.

The characteristics and advantages of the present invention will become evident from the following detailed description of an embodiment thereof, which is illustrated by way of example but without limiting effect in the attached drawings, in which:
Figure 1 is a schematic view of the apparatus for monitoring the pressure in tyres in accordance with the present invention;
Figure 2 is a schematic front view of an inflating device including the transmitter belonging to the apparatus for monitoring the pressure in tyres in accordance with an embodiment of the present invention;
Figure 3 is a circuit diagram of the transmitter in Figure 1;
Figure 4 is a time-graph of the pulse signal emitted by the transmitter in Figure 2;
Figure 5 shows schematically a RZ-type encoding with PWM modulation;
Figure 6 shows a pulse position modulation;
Figure 7 shows schematically the transmission apparatus in accordance with the present invention;
Figure 8 is a schematic front view of the inflating device including the transmitter belonging to the apparatus for monitoring the pressure in tyres in accordance with a variant of the embodiment of the present invention;
Figure 9 is a schematic front view of the inflating device including the transmitter belonging to the apparatus for monitoring the pressure in tyres in accordance with another variant of the embodiment of the present invention;
Figures 10 and 11 are schematic front views of the inflating device including the transmitter belonging to the apparatus for monitoring the pressure in tyres in accordance with further variants of the embodiment of the present invention;

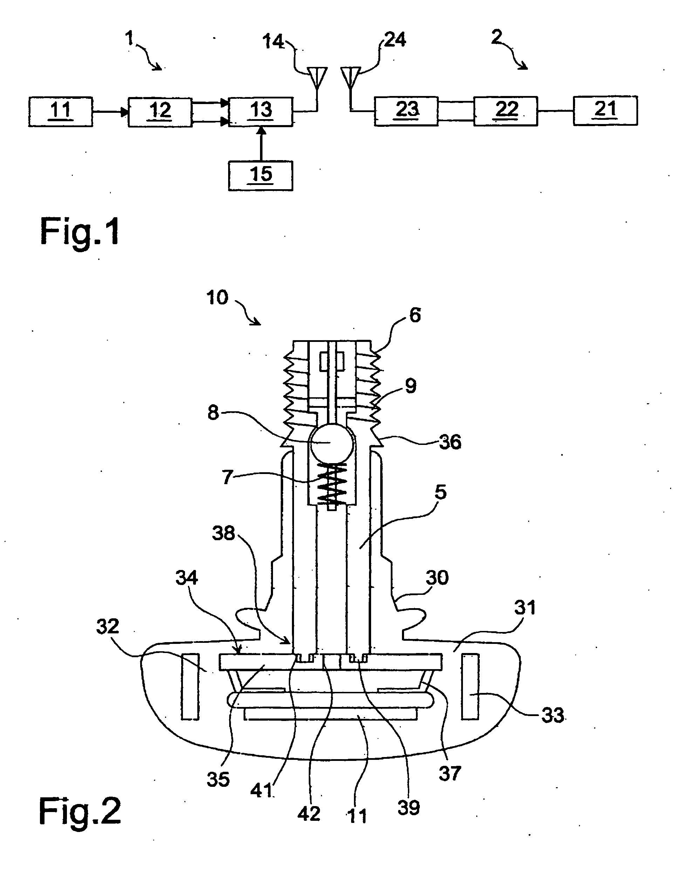

With reference to Figure 1, an apparatus is shown for monitoring the pressure in tyres in accordance with the present invention. Said apparatus includes a radio-frequency transmitter 1 and a radio-frequency receiver 2; the transmitter 1 is located inside a tyre while the receiver can be located inside the vehicle. The transmitter includes a battery 11, a microcontroller 12, a transmission section 13 with an oscillator 15 and an antenna 14. The receiver 2 includes a voltage regulator 21, a microcontroller 22, a receiving section 23 and an antenna 24.

Figure 2 shows in more detail a transmitter of Figure 1. Said transmitter 1 is fitted into an inflating device or valve 10 for tubeless tyres; the valve 10 includes a stem 5 capable of coupling the valve with the rim of the wheel (not visible in the drawing) which includes an external thread 6 for coupling to a plastic cap. The stem 5 contains a spring 7 capable of thrusting an element 8 towards a hole 9 for entry of gas, for example air, in order to close the valve. The stem 5 is partially located inside a seal 30 which includes a terminal part 31, preferably of annular type, containing a pressure measuring chamber 32 with a suitable sensor 34. The seal 30 may be provided with a reinforcing ring 33 located at the periphery of said terminal part 31; this ensures the necessary solidity at the time of fitting to the rim. Alternatively, it is possible to create elements 36 on the stem 5, in particular on the part of stem 5 located in proximity to the part of the stem which is couplable to the rim of the wheel, and these elements provide suitable anchorage for the installation of the inflating device 10. The device can be fitted to the rim of the wheel using traditional methods.

The terminal part 31 is sized so as to contain the electronic circuit for the transmitter 1. The electronic circuit is located normally on a ceramic base 35, including also the sensor 34, below which is located the battery 11. The stem 5 represents the antenna for the electronic circuit of the transmitter 1. Installing the electronic circuit of transmitter 1 inside the tyre prevents damage due to external action.

The ceramic base 35 and the electronic circuit contained therein are fixed to the stem 5 by means of suitable couplings 38 including pins 39 on the stem 5 fitted into holes 41 in the base 35; solid fixing ensures the coupling of the antenna of the transmitter to the body of the valve in such a way that the metal body of the valve acts as antenna. This mechanism ensures the necessary conditions for transmission which would otherwise be impossible; the possibility of exploiting the body of the valve as the antenna for the system allows the creation of a low-power transmission circuit capable of ensuring transmission parameters complying with the regulations on the subject of automotive equipment. It also ensures the compliance of the radio emission with the current legislation which regulates the use of low-power apparatus for the 315, 434, 868 and 915 MHz bands.

The ceramic base 35 for the transmitter's electronic circuit includes a hole 42 communicating with the hollow part of stem 5 for the passage of air to the inside of the pressure chamber 32. In order not to obstruct said passage of air to the inside of the pressure chamber 32, the battery 11 is distanced from the ceramic base 35 and is fixed to it and to the electronic circuit contained in it by means of clips 37.

Transmitter 1 is capable of transmitting messages, commands, alarms and data at radio frequency, and is particularly suitable for use in the frequency bands allocated for the use of "SRDs" (Short Range Devices), with peak transmission power of the order of 10 mW, and characterised by a transmission system with modulation of the position of the pulse (PPM = Pulse Position Modulation) with very short pulse duration.

When transmitting, the system uses an oscillator stabilised by an "SAW" (Surface Acoustic Wave) resonator, followed by an amplifier to which the modulation of the amplitude and of the temporal position of the pulse is applied.

This circuit configuration and the very fast PPM modulation allow codes or alarms or short strings of data to be transmitted in a very short time, typically of the order of a millisecond, and at all events equivalent to a fraction of the rotation of the wheel, typically of 14 - 16° of rotation at a wheel rotation speed equivalent to 200 kph. This results in a very low ratio (below 1 %) of transmission time to rest time (duty cycle) in relation to the duration of the message, thus allowing a very low average power consumption, such as to give a current absorption from the battery 11 of less than a thousandth of an ampere. The data string may be transmitted a number of times with repetition periods of the order of minutes, giving an energy consumption much lower than a traditional system; this allows the use of small-size batteries even at temperatures of -40°C. Sending the messages in a very short time and sending repeated messages allows a reduction in the influence of interference or irregularities in transmission due, for example, to multiple reflections of the radio waves, which is a particularly critical effect in the case of moving devices.

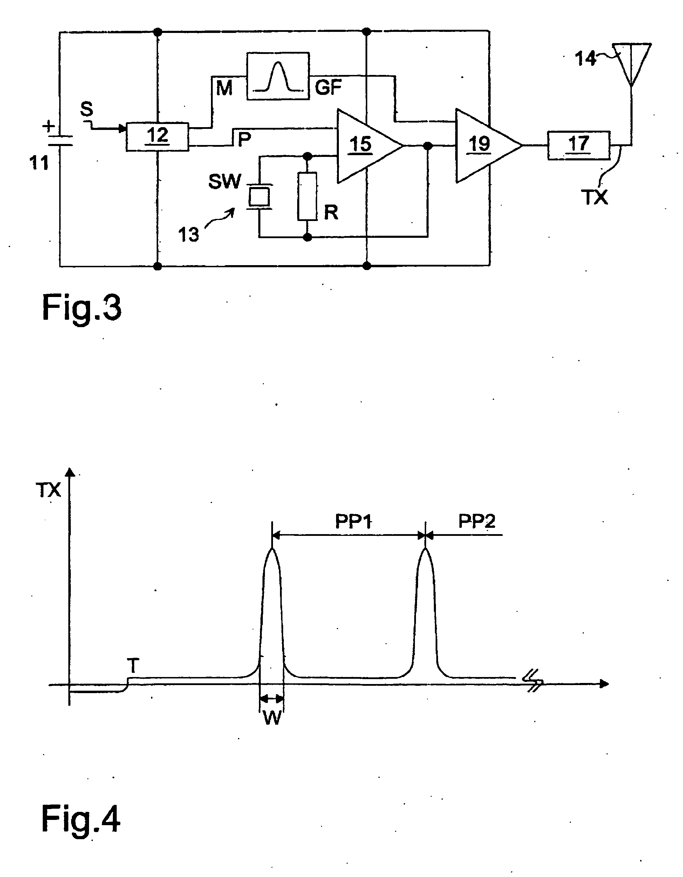

In particular, as shown in Figure 3, the transmitter's electronic circuit includes the microcontroller 12 which has as inputs the data S coming from sensor 34 and which is capable of converting it into a format suitable for pulse position modulation effected by the transmitting section 13; the microcontroller 12 sends the signals M and P to the transmitting section 13. The latter includes an oscillator 15 controlled by signal P, the signal which triggers the oscillation, having one input terminal and the output terminal connected to a surface wave (SW) resonator which has a resistance R in parallel; the resonator SW is capable of stabilising the frequency of oscillator 15, typically a frequency of 315 Mhz or 434 MHz. The signal M is input to a Gaussian filter 18 whose output signal GF, together with the output signal from the oscillator 15, is fed into an amplifier 19; signal GF modulates amplifier 19 in amplitude. The radio-frequency signal generated as output by amplifier 19 is filtered by a low-pass filter 17 and sent to antenna 14.

The signal TX transmitted by transmitter 1 is shown in Figure 4. The TX signal starts at time T when triggered by the oscillations with signal P. The first pulse is generated under the control of microcontroller 12; said first pulse represents the beginning of the message and has a pulse width W typically of 5 microseconds. The temporal position of successive pulses, i.e. the time-periods PP1, PP2...PPn, represents the content of the information to be transmitted.

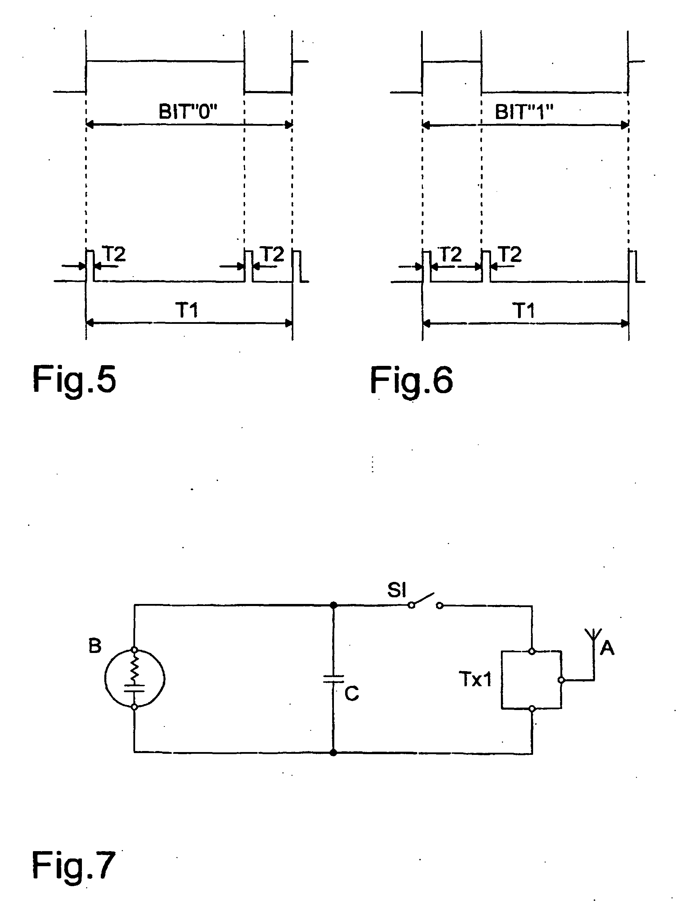

The transmission systems currently known for the transmission of data from tyres generally use a simple oscillating circuit modulated directly by the data to be transmitted with RZ (return to zero) encoding. i.e. with one transmission for each bit. Figure 5 shows the RZ encoding with PWM modulation for the bit "0" and the bit "1". With apparatus according to the present invention, given that the information being transmitted is contained in the transitions, the energy is concentrated in the transitions, as shown in Figure 6. With a time-period T2, much shorter than time-period T1, a transmission is made containing the information, but with a duty-cycle (ratio between the transmission time and the total time of the bit) of 1% or less.

Figure 7 gives a schematic description of the transmission apparatus in accordance with the present invention. The current absorbed by the power-supply device B is supplemented by the condenser C and brought to a value of 1% of the peak value. The resistor Rb represents the equivalent of the internal resistance of a lithium battery at a temperature of -40°. The modulation is represented in simplified manner by switch SI, which is closed for time T2, during which time transmission circuit TX1 with antenna A is powered. With a time T2 of the order of a few microseconds, with a duty-cycle of the order of 1% and a power-supply device of 3 volts, the voltage at transmitter TX1 drops during transmission by only 0.25 volts.

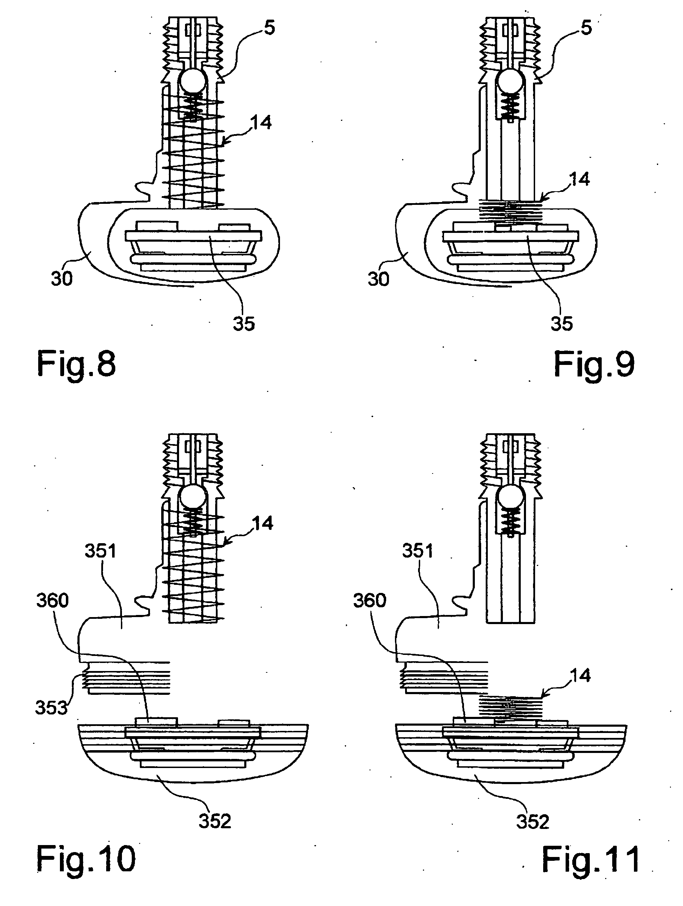

In a variant to the form of embodiment of the apparatus in Figure 2, visible in Figure 8, the antenna 14 of the transmitter is not constituted by the stem 5 but is vulcanised inside the seal 30, and positioned round the stem 5 and fixed to the electronic circuit located on the ceramic base 35; the latter is not welded to stem 5.

According to another variant of the form of embodiment of the apparatus in Figure 2, visible in Figure 9, the antenna 14 of the transmitter is welded between the base of stem 5 and the electronic circuit located on the ceramic base 35; the latter is not welded to stem 5.

As an alternative to the use of a seal 30 it is possible to use a plastic body 350 divided into two sections 351 and 352, connected to each other, for example by screwing one into the other, where they present a thread 353, as is visible in Figures 10 and 11. Body 351 includes the stem 5, and body 352 includes the electronic part and the antenna 14 where the antenna is of the type shown in Figure 6, while body 352 contains only the electronic part and body 351 contains the stem and the antenna where the antenna is of the type shown in Figure 5.

As an alternative to the use of a separate circuit, it is possible to use an integrated circuit 360 which includes the electronic circuit, as shown in Figure 3, and the pressure sensor 34; the integrated circuit can also contain a temperature sensor. The use of the integrated circuit allows low energy consumption. It is also possible to use a system of independent energy generation, based on exploiting piezoelectric or photovoltaic principles, thus avoiding the use of battery 11.

## Claims

1. Apparatus for monitoring the pressure in at least one tyre, said tyre being coupled to the rim of a wheel of a vehicle and including an inflating device (10) and a sensor (34) for measuring the pressure of the gas inside the tyre, said apparatus including a transmitter (1) and a receiver (2), said inflating device including said transmitter (1) and said transmitter (1) being connected to said sensor (34) and being capable of transmitting a signal (TX) representing the pressure in the tyre, said receiver (2) being capable of receiving the signal coming from said transmitter, said transmitter (1) including means (12, 13, 15) for processing said signal and an antenna (14) for the transmission of the signal, **characterised in that** said processing means (12, 13, 15) are capable of effecting a pulse position modulation of said signal (TX) representing the pressure in the tyre, said processing means (12, 13, 15) include an oscillator (15) and a surface wave (SW) resonator capable of stabilising the oscillation frequency of said oscillator.

2. Apparatus according to claim 1, **characterised in that** said inflating device (10) is provided with a stem (5) coupled to said rim and said stem is the antenna for said transmitter (1).

3. Apparatus according to claim 1, **characterised in that** said transmitter (1) is capable of transmitting strings of data in a period of time equal to a fraction of the rotation of the wheel.

4. Apparatus according to claim 3, **characterised in that** said transmitter is capable of transmitting strings of data in a period of time equal to a smaller fraction of the rotation of the wheel than 20° with a rotation speed of the wheel of substantially 200 kph.

5. Apparatus according to claim 3, **characterised in that** said transmitter is capable of repeating the transmission of the same string of data after a given period of time.

6. Apparatus according to claim 1, **characterised in that** said inflating device (10) includes a seal (30, 351, 352) provided with a terminal part capable of containing the electronic circuit of said transmitter.

7. Apparatus according to claim 6, **characterised in that** said terminal part (31) of the seal is equipped with a reinforcing ring (33) capable of enveloping the electronic circuit of the transmitter.

8. Apparatus according to claim 1, **characterised in that** said inflating device (10) is provided with a stem (5) couplable to said rim of the wheel, said stem (5) being provided with elements (36) capable of allowing the anchorage of the stem to the rim of the wheel.

9. Device for inflating a tyre, said tyre being coupled to the rim of a wheel of a vehicle and including a sensor (34) for measuring the gas pressure inside the tyre, said inflating device (10) including a transmitter (1) connected to said sensor (34) and capable of transmitting a signal (TX) representing the pressure in the tyre, said transmitter including means (12, 13, 15) for processing said signal and an antenna (14) for the transmission of the signal, **characterised in that** said processing means (12, 13, 15) are capable of effecting a pulse position modulation of said signal representing the pressure in the tyre, said processing means (12, 13, 15) include an oscillator (15) and a surface wave (SW) resonator capable of stabilising the oscillation frequency of said oscillator.

10. Device according to claim 9, **characterised by** including a stem (5) couplable with said rim, said stem being the antenna for said transmitter.

11. Device according to claim 9, **characterised in that** said transmitter is capable of transmitting strings of data in a period of time equal to a fraction of the rotation of the wheel.

12. Device according to claim 11, **characterised in that** said transmitter is capable of transmitting strings of data in a period of time equal to a smaller fraction of the rotation of the wheel than 20°, with a rotation speed of the wheel of substantially 200 kph.

13. Device according to claim 11, **characterised in that** said transmitter is capable of repeating the transmission of the same string of data after a given period of time.

14. Device according to claim 9, **characterised in that** said inflating device (10) includes a seal (30, 351, 352) provided with a terminal part capable of containing the electronic circuit of said transmitter.

15. Device according to claim 14, **characterised in that** said terminal part (31) of the seal is equipped with a reinforcing ring (33) capable of enveloping the electronic circuit of the transmitter.

16. Device according to claim 9, **characterised in that** said inflating device (10) is provided with a stem (5) couplable to said rim of the wheel, said stem (5) being provided with elements (36) capable of allowing the anchorage of the stem to the rim of the wheel.

17. Apparatus according to claim 6, **characterised in that** said inflating device (10) is provided with a stem (5) coupled to said rim, and said antenna (14) is vulcanised inside said seal (30, 351, 352) and is positioned round the stem.

18. Apparatus according to claim 6, **characterised in that** said inflating device (10) is provided with a stem (5) coupled to said rim; and said antenna (14) is positioned between the base of the stem and the electronic circuit of the transmitter.

19. Apparatus according to claim 6, **characterised in that** said inflating device (10) is provided with a stem (5) coupled to said rim, and said seal (351, 352) includes a first section (351) containing the stem (5) and a second section (352) containing the electronic circuit for the transmitter, said first and second sections being couplable to each other.

20. Apparatus according to claim 1, **characterised by** including an integrated circuit including said processing means (12, 13, 15) for the transmitter and said sensor (34) for measuring the gas pressure inside the tyre.

21. Apparatus according to claim 1, **characterised in that** said transmitter (1, TX1) is capable of concentrating energy only in transition time-periods (T2) less than the periods of time for transmitting one bit (T1).

22. Device according to claim 14, **characterised by** including a stem (5) coupled to said rim; said antenna (14) is vulcanised inside said seal (30, 351, 352) and is positioned round the stem.

23. Device according to claim 14, **characterised by** including a stem (5) coupled to said rim; said antenna (14) is positioned between the base of the stem and the electronic circuit of the transmitter.

24. Device according to claim 14, **characterised by** including a stem (5) coupled to said rim; said seal (351, 352) includes a first section (351) containing the stem (5) and a second section (352) containing the electronic circuit for the transmitter, said first and second sections being couplable together.

25. Device according to claim 9, **characterised by** including an integrated circuit including said processing means (12, 13, 15) for the transmitter and said sensor (34) for measuring the gas pressure inside the tyre.

26. Device according to claim 9, **characterised in that** said transmitter (1, TX1) is capable of concentrating energy only in transition time-periods (T2) less than the periods of time for transmitting one bit.

## Patentansprüche

1. Vorrichtung zum Überwachen des Drucks in wenigstens einem Reifen, wobei der Reifen mit der Autofelge eines Rads eines Fahrzeugs verbunden ist und eine Aufblasvorrichtung (10) und einen Sensor (34) zum Messen des Gasdrucks im Reifen aufweist und die Vorrichtung einen Transmitter (1) und einen Empfänger (2) beinhaltet, wobei die Aufblasvorrichtung (10) den Transmitter (1) aufweist und der Transmitter (1) mit dem Sensor (34) verbunden und in der Lage ist, ein Signal (TX), welches den Druck im Reifen repräsentiert, zu übertragen und der Empfänger (2) in der Lage ist, das vom Transmitter (1) kommende Signal zu empfangen, wobei der Transmitter (1) Mittel (12, 13, 15) zum Verarbeiten des Signals und eine Antenne (14) zum Übertragen des Signals beinhaltet, **dadurch gekennzeichnet, dass** die Verarbeitungsmittel (12, 13, 15) in der Lage sind, eine Puls-Phasen-Modulation des Signals (TX), welches den Druck im Reifen repräsentiert, durchzuführen, wobei die Verarbeitungsmittel (12, 13, 15) einen Oszillator (5) und einen Oberflächenwellen-Resonator (SW) aufweisen, der in der Lage ist, die Oszillationsfrequenz des Oszillators zu stabilisieren.

2. Vorrichtung nach Anspruch 1, **dadurch gekennzeichnet, dass** die Aufblasvorrichtung (10) mit einer Schaftspindel (5) ausgestattet ist, die mit der Autofelge gekoppelt ist und die Schaftspindel (5) als die Antenne für den Transmitter (1) dient.

3. Vorrichtung nach Anspruch 1, **dadurch gekennzeichnet, dass** der Transmitter (1) in der Lage ist, Datenstränge in einer Zeitperiode zu übertragen, die gleich einem Bruchteil der Umdrehung des Rades ist.

4. Vorrichtung nach Anspruch 3, **dadurch gekennzeichnet, dass** der Transmitter in der Lage ist, Datenstränge in einer Zeitperiode gleich einem kleineren Bruchteil der Umdrehung des Rades als 20° bei einer Drehgeschwindigkeit des Rads von im Wesentlichen 200 km/h zu übertragen.

5. Vorrichtung nach Anspruch 3, **dadurch gekennzeichnet, dass** der Transmitter in der Lage ist, die Übertragung desselben Datenstrangs nach einer vorgegebenen Zeitperiode zu wiederholen.

6. Vorrichtung nach Anspruch 1, **dadurch gekennzeichnet, dass** die Aufblasvorrichtung (10) eine Dichtung (30, 351, 352) aufweist, die mit einem Endteil (31) ausgestattet ist, das in der Lage ist, den elektronischen Kreis des Transmitters (1) aufzunehmen.

7. Vorrichtung nach Anspruch 6, **dadurch gekennzeichnet, dass** das Endteil (31) der Dichtung (10) mit einem Verstärkungsring (33) ausgestattet ist, der in der Lage ist, den elektronischen Kreis des Transmitters (1) zu umschließen.

8. Vorrichtung nach Anspruch 1, **dadurch gekennzeichnet, dass** die Aufblasvorrichtung (10) mit einer Schaftspindel (5) ausgestattet ist, die mit der Autofelge des Rads koppelbar ist, wobei die Schaftspindel (5) mit Elementen ausgestattet ist, welche die Verankerung der Schaftspindel (5) in der Autofelge des Rads erlauben.

9. Aufblasvorrichtung für einen Reifen, wobei der Reifen mit der Autofelge eines Rads eines Fahrzeugs verbunden ist und einen Sensor (34) zum Messen des Gasdrucks im Reifen aufweist und die Vorrichtung einen Transmitter (1) beinhaltet, wobei die Aufblasvorrichtung (10) den Transmitter (1) aufweist und der Transmitter (1) mit dem Sensor (34) verbunden und in der Lage ist, ein Signal (TX), welches den Druck im Reifen repräsentiert, zu übertragen, wobei der Transmitter (1) Mittel (12, 13, 15) zum Verarbeiten des Signals und eine Antenne (14) zum Übertragen des Signals beinhaltet, **dadurch gekennzeichnet, dass** die Verarbeitungsmittel (12, 13, 15) in der Lage sind, eine Puls-Phasen-Modulation des Signals (TX), welches den Druck im Reifen repräsentiert, durchzuführen, wobei die Verarbeitungsmittel (12, 13, 15) einen Oszillator (5) und einen Oberflächenwellen-Resonator (SW) aufweisen, der in der Lage ist, die Oszillationsfrequenz des Oszillators zu stabilisieren.

10. Vorrichtung nach Anspruch 9, **dadurch gekennzeichnet, dass** sie mit einer Schaftspindel (5) ausgestattet ist, die mit der Autofelge gekoppelt ist und die Schaftspindel (5) als die Antenne für den Transmitter (1) dient.

11. Vorrichtung nach Anspruch 9, **dadurch gekennzeichnet, dass** der Transmitter (1) in der Lage ist, Datenstränge in einer Zeitperiode zu übertragen, die gleich einem Bruchteil der Umdrehung des Rades ist.

12. Vorrichtung nach Anspruch 1, **dadurch gekennzeichnet, dass** der Transmitter in der Lage ist, Datenstränge in einer Zeitperiode gleich einem kleineren Bruchteil der Umdrehung des Rades als 20° bei einer Drehgeschwindigkeit des Rads von im Wesentlichen 200 km/h zu übertragen.

13. Vorrichtung nach Anspruch 1, **dadurch gekennzeichnet, dass** der Transmitter in der Lage ist, die Übertragung desselben Datenstrangs nach einer vorgegebenen Zeitperiode zu wiederholen.

14. Vorrichtung nach Anspruch 9, **dadurch gekennzeichnet, dass** die Aufblasvorrichtung (10) eine Dichtung (30, 351, 352) aufweist, die mit einem Endteil (31) ausgestattet ist, das in der Lage ist, den elektronischen Kreis des Transmitters (1) aufzunehmen.

15. Vorrichtung nach Anspruch 14, **dadurch gekennzeichnet, dass** das Endteil (31) der Dichtung (10) mit einem Verstärkungsring (33) ausgestattet ist, der in der Lage ist, den elektronischen Kreis des Transmitters (1) zu umschließen.

16. Vorrichtung nach Anspruch 9, **dadurch gekennzeichnet, dass** die Aufblasvorrichtung (10) mit einer Schaftspindel (5) ausgestattet ist, die mit der Autofelge des Rads koppelbar ist, wobei die Schaftspindel (5) mit Elementen ausgestattet ist, welche die Verankerung der Schaftspindel (5) in der Autofelge des Rads erlauben.

17. Vorrichtung nach Anspruch 6, **dadurch gekennzeichnet, dass** die Aufblasvorrichtung (10) mit einer Schaftspindel (5) ausgestattet ist, die mit der Autofelge gekoppelt ist und die Antenne (14) innerhalb der Dichtung (30, 351, 352) vulkanisiert und um die Schaftspindel (5) angeordnet ist.

18. Vorrichtung nach Anspruch 6, **dadurch gekennzeichnet, dass** die Aufblasvorrichtung (10) mit einer Schaftspindel (5) ausgestattet ist, die mit der Autofelge gekoppelt ist und die Antenne (14) zwischen der Basis der Schaftspindel (5) und dem elektronischen Kreis des Transmitters (1) positioniert ist.

19. Vorrichtung nach Anspruch 6, **dadurch gekennzeichnet, dass** die Aufblasvorrichtung (10) mit einer Schaftspindel (5) ausgestattet ist, die mit der Autofelge gekoppelt ist, und die Dichtung (351, 352) einen ersten Abschnitt (351), der die Schaftspindel (5) aufweist, und einen zweiten Abschnitt (352) beinhaltet, der den elektronischen Kreis des Transmitters (1) aufweist, wobei der erste und der zweite Abschnitt miteinander koppelbar sind.

20. Vorrichtung nach Anspruch 1, **gekennzeichnet durch** einen integrierten Kreis, der die Verarbeitungsmittel (12, 13, 15) für den Transmitter und den Sensor (34) zum Messen des Gasdrucks im Reifen beinhaltet.

21. Vorrichtung nach Anspruch 1, **dadurch gekennzeichnet, dass** der Transmitter (1, TX) in der Lage ist, Energie nur während Übertragungszeitperioden (T2) zu konzentrieren, die weniger als die Zeitperioden zum Übertragen eines Bits (T1) betragen.

22. Vorrichtung nach Anspruch 4, **gekennzeichnet durch** eine Schaftspindel (5), die mit der Autofelge gekoppelt ist und die Antenne (14) innerhalb der Dichtung (30, 351, 352) vulkanisiert und um die Schaftspindel herum angeordnet ist.

23. Vorrichtung nach Anspruch 4, **gekennzeichnet durch** eine Schaftspindel (5), die mit der Autofelge gekoppelt ist und die Antenne (14) zwischen der Basis der Schaftspindel (5) und dem elektronischen Kreis des Transmitters positioniert ist.

24. Vorrichtung nach Anspruch 4, **gekennzeichnet durch** eine Schaftspindel (5), die mit der Autofelge gekoppelt ist, wobei die Dichtung (351, 352) einen ersten Abschnitt (351), der die Schaftspindel (5) aufweist, und einen zweiten Abschnitt (352) beinhaltet, der den elektronischen Kreis des Transmitters (1) aufweist, wobei der erste und der zweite Abschnitt miteinander koppelbar sind.

25. Vorrichtung nach Anspruch 9, **gekennzeichnet durch** einen integrierten Kreis, der die Verarbeitungsmittel (12, 13, 15) für den Transmitter und den Sensor (34) zum Messen des Gasdrucks im Reifen beinhaltet.

26. Vorrichtung nach Anspruch 9, **dadurch gekennzeichnet, dass** der Transmitter (1, TX) in der Lage ist, Energie nur während Übertragungszeitperioden (T2) zu konzentrieren, die weniger als die Zeitperioden zum Übertragen eines Bits betragen.

## Revendications

1. Appareil pour contrôler la pression dans au moins un pneumatique, ledit pneumatique étant couplé à la jante d'une roue d'un véhicule et comprenant un dispositif de gonflage (10) et un capteur (34) pour mesurer la pression du gaz à l'intérieur du pneumatique, ledit appareil comprenant un émetteur (1) et un récepteur (2), ledit dispositif de gonflage comprenant ledit émetteur (1), et ledit émetteur (1) étant connecté audit capteur (34) et étant susceptible d'émettre un signal (TX) représentant la pression dans le pneumatique, ledit récepteur (2) étant susceptible de recevoir le signal venant dudit émetteur, ledit émetteur (1) comprenant des moyens (12, 13, 15) pour traiter ledit signal et une antenne (14) pour l'émission du signal, **caractérisé en ce que** lesdits moyens de traitement (12, 13, 15) sont susceptibles d'effectuer une modulation de position d'impulsion dudit signal (TX) représentant la pression dans le pneumatique, lesdits moyens de traitement (12, 13, 15) comprenant un oscillateur (15) et un résonateur à onde de surface (SW) susceptible de stabiliser la fréquence d'oscillation dudit oscillateur.

2. Appareil selon la revendication 1, **caractérisé en ce que** ledit dispositif de gonflage (10) est muni d'une tige (5) couplée à ladite jante, et **en ce que** ladite tige est l'antenne pour ledit émetteur (1).

3. Appareil selon la revendication 1, **caractérisé en ce que** ledit émetteur (1) est susceptible d'émettre des chaînes de données dans une période de temps égale à une fraction de la rotation de la roue.

4. Appareil selon la revendication 3, **caractérisé en ce que** ledit émetteur est susceptible d'émettre des chaînes de données dans une période de temps égale à une fraction de la rotation de la roue inférieure à 20° avec une vitesse de rotation de la roue de sensiblement 200 k/h.

5. Appareil selon la revendication 3, **caractérisé en ce que** ledit émetteur est susceptible de répéter l'émission de la même chaîne de données après une période de temps donnée.

6. Appareil selon la revendication 1, **caractérisé en ce que** ledit dispositif de gonflage (10) comprend un joint d'étanchéité (30, 351, 352) muni d'une partie terminale susceptible de contenir le circuit électronique dudit émetteur.

7. Appareil selon la revendication 6, **caractérisé en ce que** ladite partie terminale (31) du joint d'étanchéité est équipée d'une bague de renfort (33) susceptible d'envelopper le circuit électronique de l'émetteur.

8. Appareil selon la revendication 1, **caractérisé en ce que** ledit dispositif de gonflage (10) est muni d'une tige (5) pouvant être couplée à ladite jante de la roue, ladite tige (5) étant munie d'éléments (36) susceptibles de permettre l'ancrage de la tige à la jante de la roue.

9. Dispositif pour gonfler un pneumatique, ledit pneumatique étant couplé à la jante d'une roue d'un véhicule et comprenant un capteur (34) pour mesurer la pression de gaz à l'intérieur du pneumatique, ledit dispositif de gonflage (10) comprenant un émetteur (1) connecté audit capteur (34) et susceptible d'émettre un signal (TX) représentant la pression dans le pneumatique, ledit émetteur comprenant des moyens (12, 13, 15) pour traiter ledit signal et une antenne (14) pour l'émission du signal, **caractérisé en ce que** lesdits moyens de traitement (12, 13, 15) sont susceptibles d'effectuer une modulation de position d'impulsion dudit signal représentant la pression dans le pneumatique, lesdits moyens de traitement (12, 13, 15) comprenant un oscillateur (15) et un résonateur à onde de surface (SW) susceptible de stabiliser la fréquence d'oscillation dudit oscillateur.

10. Dispositif selon la revendication 9, **caractérisé en ce qu'**il comprend une tige (5) pouvant être couplée à ladite jante, ladite tige étant l'antenne pour ledit émetteur.

11. Dispositif selon la revendication 9, **caractérisé en ce que** ledit émetteur est susceptible d'émettre des chaînes de données dans une période de temps égale à une fraction de la rotation de la roue.

12. Dispositif selon la revendication 11, **caractérisé en ce que** ledit émetteur est susceptible d'émettre des chaînes de données dans une période de temps égale à une fraction de la rotation de la roue inférieure à 20°, avec une vitesse de rotation de la roue de sensiblement 200 k/h.

13. Dispositif selon la revendication 11, **caractérisé en ce que** ledit émetteur est susceptible de répéter l'émission de la même chaîne de données après une période de temps donnée.

14. Dispositif selon la revendication 9, **caractérisé en ce que** ledit dispositif de gonflage (10) comprend un joint d'étanchéité (30, 351, 352) muni d'une partie terminale susceptible de contenir le circuit électronique dudit émetteur.

15. Dispositif selon la revendication 14, **caractérisé en ce que** ladite partie terminale (31) du joint d'étanchéité est équipée d'une bague de renfort (33) susceptible d'envelopper le circuit électronique de l'émetteur.

16. Dispositif selon la revendication 9, **caractérisé en ce que** ledit dispositif de gonflage (10) est muni d'une tige (5) pouvant être couplée à ladite jante de la roue, ladite tige (5) étant munie d'éléments (36) susceptibles de permettre l'ancrage de la tige à la jante de la roue.

17. Appareil selon la revendication 6, **caractérisé en ce que** ledit dispositif de gonflage (10) est muni d'une tige (5) couplée à ladite jante, et **en ce que** ladite antenne (14) est vulcanisée à l'intérieur dudit joint d'étanchéité (30, 351, 352) et est positionnée autour de la tige.

18. Appareil selon la revendication 6, **caractérisé en ce que** ledit dispositif de gonflage (10) est muni d'une tige (5) couplée à ladite jante, et **en ce que** ladite antenne (14) est positionnée entre la base de la tige et le circuit électronique de l'émetteur.

19. Appareil selon la revendication 6, **caractérisé en ce que** ledit dispositif de gonflage (10) est muni d'une tige (5) couplée à ladite jante, et **en ce que** ledit joint d'étanchéité (351, 352) comprend une première section (351) contenant la tige (5) et une deuxième section (352) contenant le circuit électronique pour l'émetteur, lesdites première et deuxième sections pouvant être couplées l'une à l'autre.

20. Appareil selon la revendication 1, **caractérisé en ce qu'**il comprend un circuit intégré incluant lesdits moyens de traitement (12, 13, 15) pour l'émetteur et ledit capteur (34) pour mesurer la pression de gaz à l'intérieur du pneumatique.

21. Appareil selon la revendication 1, **caractérisé en ce que** ledit émetteur (1, TX1) est susceptible de concentrer de l'énergie uniquement dans des périodes de temps de transition (T2) inférieures aux périodes de temps pour émettre un bit (T1).

22. Dispositif selon la revendication 14, **caractérisé en ce qu'**il comprend une tige (5) couplée à ladite jante ; et **en ce que** ladite antenne (14) est vulcanisée à l'intérieur dudit joint d'étanchéité (30, 351, 352) et est positionnée autour de la tige.

23. Dispositif selon la revendication 14, **caractérisé en ce qu'**il comprend une tige (5) couplée à ladite jante ; et **en ce que** ladite antenne (14) est positionnée entre la base de la tige et le circuit électronique de l'émetteur.

24. Dispositif selon la revendication 14, **caractérisé en ce qu'**il comprend une tige (5) couplée à ladite jante ; et **en ce que** ledit joint d'étanchéité (351, 352) comprend une première section (351) contenant la tige (5) et une deuxième section (352) contenant le circuit électronique pour l'émetteur, lesdites première et deuxième sections pouvant être couplées l'une à l'autre.

25. Dispositif selon la revendication 9, **caractérisé en ce qu'**il comprend un circuit intégré incluant lesdits moyens de traitement (12, 13, 15) pour l'émetteur et ledit capteur (34) pour mesurer la pression de gaz à l'intérieur du pneumatique.

26. Dispositif selon la revendication 9, **caractérisé en ce que** ledit émetteur (1, TX1) est susceptible de concentrer de l'énergie uniquement dans des périodes de temps de transition (T2) inférieures aux périodes de temps pour émettre un bit.
